# EUROPEAN PATENT SPECIFICATION

(11) **EP 1 840 153 B1**
(45) Date of publication and mention of the grant of the patent: **11.03.2009**
(21) Application number: 06111783.4
(22) Date of filing: 27.03.2006
(51) Int. Cl.: C08J 3/09, C08J 3/07

(54) **Process for the preparation of an artificial latex**
Verfahren zur Herstellung einer wässrigen Kauschuk-Emulsion
Préparation d'emulsion aqueuse de caoutchouc

(43) Date of publication of application: 03.10.2007
(73) Proprietor: KRATON Polymers Research B.V., 1030 BH Amsterdam (NL)
(72) Inventor: HUIZEN, van der, Adrie, 1030 BH, AMSTERDAM (NL); FURTON, Jean, 1031 BH, AMSTERDAM (NL); WAAL, van der, Arwin, 1031 BH, AMSTERDAM (NL)
(74) Representative: Kortekaas, Marcel C.J.A.

(56) References cited:
- GB-A- 893 066
- GB-A- 983 297
- GB-A- 1 295 250
- US-A- 3 310 515
- US-A- 5 792 494

## Description

### Technical Field

The present invention concerns a process of producing emulsions of rubber in water (so-called "artificial latex"). More in particular, the invention concerns the preparation of a conjugated diene polymer latex, more specifically an isoprene rubber latex.

### Background Art

Both natural and synthetic rubber latexes are emulsions of rubber in water. The emulsions are stabilized with proteins or surface-active agents. The diameter of rubber particles average from as low as 0.1 micron for some synthetic latexes to nearly 1 micron for natural latex. The term "latex" is applied to synthetic as well as natural latexes, and stems from the botanical name of the milky fluid that is derived from rubber trees and which is the source of natural rubber. The term "serum" is used for the aqueous medium.

The process of producing emulsions of rubber in water is already known for many years. For instance, in US 2595797 the following steps are known:
1. preparing a solution of a rubber like polymer in a water-insoluble volatile organic solvent in a concentration sufficient for emulsification
2. introducing the solution under pressure into water containing a surface active agent (e.g., dioctyl ester of sodium sulfo-succinic acid)
3. adding an antifoamant (e.g., polysilicone oil) and agitating the mixture until emulsion is obtained
4. removing the solvent by flashing (whilst avoiding excessive foaming)
5. concentrating the solids content of the emulsion by allowing the emulsion to stand for 24 hours and removing the serum (containing less than 2% solids.

Likewise, in US 2799662 a process is described for producing aqueous dispersions of elastomers wherein the method consists of a number of integrated steps which include the dissolving of the dry polymeric material in a suitable selected solvent, dispersing the thus prepared polymer solution into a carefully selected and adjusted water-emulsifier system and, finally, stripping out the solvent to leave the polymer dispersion. According to this reference, in the preparation of the aqueous emulsifier system, it is highly desirable to have present two emulsifiers, one of the type which is hydrocarbon soluble (e.g., alkali metal petroleum sulfonates having 20 to 21 carbon atoms arranged in an alkyl-aryl structure) and one of the water soluble type (e.g., alkali metal sulphate derivatives of higher alcohols). Emulsification of the polymer solvent mixture and the aqueous emulsifier mixture is accomplished under conditions preventing flashing of the solvent.

The problem of emulsion stability when stripping off the solvent is addressed in US 2871137 , which provides a method for preparing emulsifying agents based on the hydrocarbon polymers that are emulsified.

A method for preparing stable emulsions of polymeric or resinous materials is furthermore described in US 2947715. This is accomplished by dissolving the rubber or resin in a suitable solvent, adding a creaming agent to the polymer solution during emulsification, and creaming the resultant latex prior to removal of the solvent, removing the solvent and then again creaming the solvent-free latex.

In US 2955094 , ortho-phosphoric acid and organic sulphate salts are used as emulsifiers in the preparation of emulsion latexes from hydrocarbon polymers. As indicated in this reference, experience has shown that latexes are relatively unstable and tend to coagulate when subjected to mechanical stress. Mechanical instability may be brought about by the simple movement of an agitator stirring the colloid. Maintenance costs are increased because the equipment becomes coated with the coagulated rubber and furthermore, an appreciable quantity of the rubber is lost. Another type of instability encountered with polymer latexes is that they oil-out and develop coagulum during the solvent stripping step.

In US 3250737 it has been mentioned that synthetic elastomers produced by solution polymerization methods have received much attention due to advances and changes in technology. This reference set out to produce concentrated latexes of synthetic elastomers from organic solutions thereof in a manner that is both rapid, efficient and economical. This is accomplished by mixing a solution of a synthetic elastomer in an organic solvent, water and an emulsifying agent, homogenizing the mixture at least until the resulting emulsion is stable, stripping the organic solvent at elevated temperatures and pressures below conditions at which water boils, centrifuging the resulting dilute aqueous latex, recovering and recycling the aqueous serum from the said centrifuging step and recovering the concentrated latex. This reference concentrates on the steps of flashing and centrifuging, it is immaterial how the hydrocarbon solution is made.

Interestingly, the step of dissolving of the dry polymeric material in a suitable selected solvent is generally not described in detail, whereas this step may be a bottleneck and/or cause problems further on in the process and/or in the latex produced from the hydrocarbon polymer-organic solvent solution.

Thus, it is common knowledge that smaller particles (greater surface) dissolve faster than larger particles. Isoprene rubber (hereinafter "IR") and similar hydrocarbon polymers are generally sold and transported in bales. To dissolve IR more quickly in the organic solvent, it would therefore be obvious to chop and/or granulate the hydrocarbon polymers. On the other hand, IR and similar rubber materials are difficult to chop and/or granulate and also have a tendency - if there is any form of transport or storage before the dissolution step - to re-agglomerate (due to cold flow properties).

The use of dusting agents (such as talcum, or zinc stearate, etc.) is common to prevent the coagulation of the polymer particles. On the other hand, it is highly undesirable to have foreign material in the resulting latexes. Indeed, in the preparation of dipped goods, such as medical gloves and condoms and the like any form of foreign material should be avoided. The use of talc is therefore not recommended.

It is an object of this invention to provide an improved process for the preparation of a hydrocarbon polymer-organic solvent solution that is to be used in the preparation of a polymer latex. It is a further object of this invention to provide an improved process for making a polymer latex.

It may therefore be clear that there is still an interest in a process for preparing an artificial latex without suffering from the aforementioned disadvantages. We provide hereafter modifications of the process that each separately, but in particular when combined substantially improve the feasibility of the preparation process, whilst maintaining the high quality of the artificial latex so prepared.

### Disclosure of Invention

Process for the preparation of an aqueous rubber emulsion (artificial latex), comprising the steps:
(a) size reduction of the rubber, whereby granules are produced with shorter dissolving time;
(b) cement formation, wherein the granules of step (a) are dissolved in a suitable hydrocarbon solvent;
(c) preparation of an aqueous soap solution;
(d) emulsification of the cement formed in step (b), using the aqueous soap solution prepared in step (c), thus forming an oil in water emulsion;
(e) hydrocarbon solvent removal, resulting in an aqueous emulsion of the rubber, and optionally
(f) emulsion concentration, forming an artificial latex with a higher solids content,
characterized in that in step (a) the size reduction is carried out using a chopper and/or granulator wherein a soap is used as processing aid, preferably identical to the soap used in steps (c) and (d).

### Mode(s) for Carrying Out the Invention

The rubber that is used to form the artificial latex can be any polymer, typically made by solvent polymerization, known in the art. This includes for example polyisobutylene and copolymers thereof, polyvinyl compounds such as acrylic and methacrylic acid esters and polyvinyl ethers and also cellulose derivatives, copolymers of styrene and conjugated diene(s) and or acrylonitrile and (co)polymers of diolefins. A further class of polymers are copolymers prepared from ethylene and one other monoolefin having up to 8 carbon atoms, such as the elastomeric copolymer of ethylene and propylene, the copolymer of ethylene and butane-1, and the like. Another class of rubber like polymers are terpolymers obtained from ethylene, propylene and a diene such as 1,5-hexadiene and the like.

Of particular interest are (co)polymers of diolefins, with butadiene and isoprene as representatives of the dienes. Preferably, these (co)polymers, are polymerized by solution polymerization to a high cis-1,4-content (at least in the order of about 90%). These (co)polymers are further characterized by a (very) high molecular weight. Most preferably, they are made by anionic polymerization in the presence of a lithium catalyst, rather than a Ziegler type catalyst, thus ensuring a very low ash content. Most preferably, the rubber like polymer is isoprene rubber, for instance any one of the grades commercialized by KRATON Polymers.

The process of the invention is also applicable in case of an artificial latex made using bales of natural rubber.

The rubber like polymer, preferably isoprene rubber, may be dissolved in any suitable solvent. As to the solvent to be selected, its choice will depend somewhat on the exact nature of the rubber and the boiling point of the solvent itself. It is necessary that a solvent be used which will (quickly and easily) dissolve the rubber. For the less polar polymers, the aliphatic hydrocarbon solvents having from four up to about ten carbon atoms are useful. These include isopentane, cyclopentane, n-pentane, the hexanes, the heptanes, octane, and the like. For isoprene rubber, the preferred solvent is n-pentane.

The normal limit as to the amount of the rubber like polymer dissolved in the solvent will be the extent of the solubility of the polymer in the solvent. In case of isoprene rubber, the preferred concentration is a solids content of less than 20 percent by weight, preferably of 10-15 percent by weight. Another way to define the amount of rubber like polymer is by the viscosity of the polymer solution, which should preferably be below 20,000 centipoises (room temperature).

For the size reduction of the rubber bales, whether natural or synthetic rubber, choppers and/or granulators can be used. Preferably, choppers and/or granulators are used that in a one step or two step preparations can reduce the rubber from a standard bale size to average particles sizes smaller than 50 mm, preferably smaller than 25 mm, more preferably smaller than 15 mm. Average particles sizes smaller than about 5 mm generally do not provide additional advantages.

There are no specific conditions in respect of this preparatory step. Obviously, the safety conditions set out by the equipment manufacturer must be followed, and degradation of the rubber must be avoided.

In principle, any soap may be used. However, since the problem underlying the invention is to avoid foreign material that restricts the use of the latex so produced, the soap is preferably food and skin approved. More preferably is identical to the soap that is being used in the subsequent steps (c) and (d). For preparation of an IR latex, preferably a rosin type soap is used.

The soap is preferably used in a concentration of between 0.5 and 5% by weight in water. More concentrated solutions may be used, but generally provide no advantages. Note in this regard that the hardness of the water used for the preparation of the soap solution is important. For the preparation of the soap solution very soft water (0-4 DH) or soft water (4-8 DH) should be used.

The amount of soap to be used during step (a) will depend on the equipment used in the size reduction step. Sufficient soap should be used to avoid re-agglomeration in the chopper and/or granulator or shortly thereafter. Excess soap may be recycled. In other words, the amount of soap is not very critical and rather easy to determine for a person skilled in the art. A good starting point is an amount of soap solution versus rubber in a weight ratio from 3:1 to 1:3, preferably from 2:1 to 1:2.

Having made small particles of the rubber starting material, it may be dissolved into the solvent by any ordinary means. For instance, it may be dissolved in the solvent (below the boiling temperature thereof) in a stirred tank.

The latex may be made by any of the processes already known in the art. This includes each of the prior art references referred to in paragraphs , [0003] to [0008], as well as NL287078; GB1004441; US3249566; US3261792; US3268501; US3277037; US3281386; US3287301; US3285869; US3305508; US3310151; US3310516; US3313759; US3320220; US3294719; GB1162569; GB1199325; US3424705; US3445414; SU265434; US3503917; US3583967; GB1327127; US3644263; US3652482;US3808166; US3719572; DE2245370; JP48038337; FR2153913; GB1296107; FR2172455; US3815655; US3839258; US3842052; GB1384591; US3879326; US3892698; US3862078; US3879327; US3886109; US3920601; JP51080344; JP50127950; JP54124042; JP54124040; US4243566; JP56161424; US4344859; SU1014834; JP58091702; SU1375629; JP1123834; SU520769 and R0102665; as well as US3007852; US3622127; US4160726; GB2051086; JP58147406; SU1058974; EP512736; JP8120124 and US6075073.

The process of immediate interest is the one that is described in Chapter 9 of the Stanford Research Institute, PEP Report No. 82 of December 1972. Thus, a solution of polyisoprene in isopentane is fed to a premix tank, where it is premixed with a soap solution (mostly serum recycle) from the serum storage. The mixture is fed to an emulsification loop in which the recycle to fresh feed ratio is about 2/1. The emulsifier is a high speed (3,500 rpm) centrifugal pump. The emulsion passes to a hold tank where the emulsion is held for 3 hours, permitting any "cream" (emulsion with oversize particles) to rise to the top and be recycled. About 1% emulsion is thus recycled to ensure complete emulsification of any minor amount not previously fully emulsified. If any portion of the emulsified cement is in the form of oversize particles when the solvent is flashed or stripped from this portion, the resulting polymer cannot remain in colloidal suspension, but will deposit out and foul the equipment. From the hold tank, the emulsion is passed to a heater where a substantial portion of the solvent (but only a minor portion of water) is vaporized into gaseous bubbles, causing formation of a foam resembling whipped cream. The foam passes to a time tank to allow the solvent to reach its equilibrium concentration relative to the polymer throughout the foam. The foam is then cooled to 110°F at about 10 psig, causing the solvent to condense and the foam to collapse. The condensed solvent forms a separate liquid phase from the aqueous emulsion phase. The mixture passes through a coalescer packed with steel wool into a separator. The separated solvent is transferred to the solvent surge tank. The emulsion is centrifuged and concentrated in a centrifuge where a quantity of serum is separated out and recycled to the serum storage tank. Since the polymer particles in the concentrated emulsion still contain solvent, the emulsion is passed through a second stage of foam formation, collapse and phase separation. The second stage separated solvent is also transferred to the solvent surge tank. The second stage emulsion phase is heated to 180°F in a flash heater to flash off the remaining solvent in a flash tank. This solvent is condensed and stored in the solvent surge tank. Some water is also flashed from the flash tank, and is condensed, separated, and recycled to the soap solution tank. The latex from the flash tank contains about 24% rubber solids. It is cooled to 110°F in an emulsion cooler, concentrated to 64% in a centrifuge and finally collected and stored in a latex product storage vessel. The serum spun out in the concentration step is recycled to the serum storage vessel.

The following examples will further illustrate in greater detail how this invention may be carried out, but it is not intended that the invention be restricted in any way thereto.

### EXAMPLE 1

Several size reduction tests were done using either a combination of apparatuses (e.g., chopper and grinder) or a single machine (e.g., a granulator). Very good results were obtained using a granulator.

Bales of IR (about 34 kg) and half size bales were used in a test using a granulator equipped with an feed chute, rotor and stator knives in the knife mill and a screen of the right mesh size (smaller than 15 mm).

Bales of IR could be granulated with little blocking using a dusting agent. However, blocking occurred when no dusting agent was used. Using a rosin-type soap at 1.5 %wt concentration (prepared in demineralised water) in a ratio of about 3 kg soap on 5 kg rubber resulted in excellent throughput with rubber particles of average size smaller than 15 mm.

## Claims

1. A process for the preparation of an aqueous rubber emulsion (artificial latex), comprising the steps:
(a) size reduction of the rubber, whereby granules are produced with shorter dissolving time;(b) cement formation, wherein the granules of step (a) are dissolved in a suitable hydrocarbon solvent;(c) preparation of an aqueous soap solution;(d) emulsification of the cement formed in step (b), using the aqueous soap solution prepared in step (c), thus forming an oil in water emulsion;(e) hydrocarbon solvent removal, resulting in an aqueous emulsion of the rubber, and optionally(f) emulsion concentration, forming an artificial latex with a higher solids content,**characterized in that** in step (a) the size reduction is carried out using a chopper and/or granulator wherein a soap is used as processing aid, preferably identical to the soap used in steps (c) and (d).

2. A process for the preparation of an artificial latex as claimed in claim 1, wherein the soap used as processing aid is identical to the soap used in steps (c) and (d).

3. A process for the preparation of an artificial latex as claimed in claim 1 or claim 2, wherein the rubber is isoprene rubber and the soap is a rosin type soap.

## Patentansprüche

1. Verfahren zur Herstellung einer wässrigen Gummiemulsion (künstlicher Latex), umfassend die Schritte:
(a) der Größenverringerung des Gummis, wobei Körner mit kürzerer Lösungszeit hergestellt werden; (b) der Zementbildung, wobei die Körner aus Schritt (a) in einem geeigneten Kohlenwasserstofflösungsmittel gelöst werden; (c) der Herstellung einer wässrigen Seifenlösung; (d) der Emulgierung des in Schritt (b) gebildeten Zements unter Verwendung der in Schritt (c) hergestellten wässrigen Seifenlösung, wobei auf diese Weise eine Öl-in-Wasser-Emulsion gebildet wird, (e) des Entfernens des Kohlenwasserstofflösungsmittels, wodurch eine wässrige Emulsion des Gummis resultiert, und gegebenenfalls (f) des Einengens der Emulsion unter Bildung eines künstlichen Latex mit einem höheren Feststoffgehalt,
**dadurch** charakterisiert, dass in Schritt (a) die Größenverringerung unter Verwendung eines Zerhackers und/oder Granulators ausgeführt wird, wobei eine Seife als Verarbeitungshilfsmittel verwendet wird, die vorzugsweise mit der in den Schritten (c) und (d) verwendeten Seife identisch ist.

2. Verfahren zur Herstellung eines künstlichen Latex gemäß Anspruch 1, worin die als Verarbeitungshilfsmittel verwendete Seife mit der in den Schritten (c) und (d) verwendeten Seife identisch ist.

3. Verfahren zur Herstellung eines künstlichen Latex gemäß Anspruch 1 oder 2, worin der Gummi Isoprengummi und die Seife eine harzartige Seife ist.

## Revendications

1. Procédé pour la préparation d'une émulsion aqueuse de caoutchouc (latex artificiel), comprenant les étapes de :
a) réduction de la dimension du caoutchouc, pour produire des granules ayant une durée de dissolution plus courte ;
b) formation d'un ciment, au cours de laquelle les granules de l'étape a) sont dissous dans un solvant hydrocarboné approprié ;
c) préparation d'une solution aqueuse de savon;
d) émulsification du ciment obtenu dans l'étape b), en utilisation la solution aqueuse de savon préparée dans l'étape c), pour former une émulsion huile dans l'eau ;
e) élimination du solvant hydrocarboné, pour obtenir une émulsion aqueuse de caoutchouc ;
f) concentration de l'émulsion, pour former un latex artificiel ayant une teneur élevée en solides ;
**caractérisé en ce que,** dans l'étape a), la réduction de la dimension est effectuée à l'aide d'un couteau et/ou d'un broyeur en utilisant en tant qu'adjuvant de fabrication un savon qui est de préférence identique au savon utilisé dans les étapes c) et d).

2. Procédé pour la préparation d'un latex artificiel selon la revendication 1, dans lequel le savon utilisé comme adjuvant de fabrication est identique au savon utilisé dans les étapes c) et d).

3. Procédé pour la préparation d'un latex artificiel selon la revendication 1, dans lequel le caoutchouc est un caoutchouc isoprène et le savon est un savon du type colophane.
